# EUROPÄISCHE PATENTANMELDUNG

(11) **EP 1 612 636 A1**
(43) Veröffentlichungstag der Anmeldung: **04.01.2006**
(21) Anmeldenummer: 04015475.9
(22) Anmeldetag: 01.07.2004
(51) Int. Cl.: G06F 1/00

(54) **Verfahren zur Datenarchivierung mit automatischer Ver- und Entschlüsselung**

(71) Anmelder: Tecnostore AG, 6003 Luzern (CH)
(72) Erfinder: Kezmann, Bruno Rudolf, 6312 Steinhausen (CH)
(74) Vertreter: Blum, Rudolf Emil

(57) **Zusammenfassung**

Beim Verfahren zur Datenarchivierung mit automatischer Ver- und Entschlüsselung werden Daten (9, 10) zwischen einer Kundenstation (1) und einer Archivstation (4) ausgetauscht. Ein zwischen die Stationen (1, 4) geschaltetes Sicherungsmittel (2) verschlüsselt die in Richtung Archivstation (4) übertragenen blanken Daten (9) und entschlüsselt die in Richtung Kundenstation (1) übertragenen verschlüsselten Daten (10). Die Verschlüsselung erfolgt mit mindestens zwei Schlüsseln (6, 7). Einer der zwei Schlüssel (6, 7) wird ausgelagert, indem er an die Archivstation (4) übertragen und nach der Verschlüsselung lokal, d.h. im Sicherungsmittel (2) gelöscht wird. Bei einem Diebstahl der Sicherungsstation (2) ist zwar ein Zugriff auf die verschlüsselten Daten (10) auf der Archivstation (4) möglich, deren Entschlüsselung kann jedoch durch ein Löschen des ausgelagerten Schlüssels (7) auf der Archivstation (4) einfach, zuverlässig und nachvollziehbar verhindert werden.

## Beschreibung

Verfahren zur Datenarchivierung mit automatischen Ver- und Entschlüsselung gemäss Oberbegriff des Anspruch 1.

Der Begriff "Archivierung" ist im vorliegenden Dokument so zu verstehen, dass er sowohl das Ablegen in einem Archiv, als auch das Abrufen aus einem Archiv umfasst.

Verfahren dieser Art dienen dazu Daten von einer oder mehrerer Kundenstationen auf einer Archivstation zu archivieren. Archivierung von Daten auf einer zentralen Archivstation bietet den Vorteil einer grösseren Sicherheit gegen Datenverlust und Datendiebstahl. Eine Archivstation kann in einem speziell gesichertem Raum aufgestellt werden, was bei Kunden- bzw. Arbeitsstationen nicht immer möglich ist. Ferner ist es einfacher von der Archivstation regelmässige Sicherungskopien des Datenbestandes zu erstellen als von einer Vielzahl von Kundenstationen.

Eine zentrale Archivierung bringt jedoch den Umstand mit sich, dass die Daten zwischen den Kundenstationen und der Archivstation übertragen werden müssen und dass sich verschiedene Kunden oder Benutzer die Archivstation teilen. Dies erfordert spezielle Sicherheitsvorkehrungen. Es ist bekannt hierfür die Daten der Kundenstation, bevor sie zur Archivstation übertragen werden, zu verschlüsseln und nach der Rückübertragung von der Archivstation wieder zu entschlüsseln. Bei der Verschlüsselung kann z.B. eine Smartcard, ein sogenanntes "Token", zum Einsatz kommen, in der der Schlüssel abgelegt ist, und welche durch ein Passwort geschützt ist.

Passwörter haben den Nachteil, dass sie vergessen, ausgetauscht oder vom Benutzer aufgeschrieben und dann gestohlen werden können. Das gleiche gilt für Verschlüsselungshard- und Software. Auch diese kann gestohlen werden, öder zumindest die für den Nachbau erforderliche Dokumentation kann gestohlen werden. Oft ist es für Hacker daher vergleichsweise einfach auf die archivierten Daten zuzugreifen. Eine weitere Schwachstelle sind die Betriebssysteme von Kunden- und Archivstation, welche meist eine Vielzahl von Sicherheitslücken aufweisen. Ferner sind bei bekannten Systemen für die Installation und Benutzung, d.h. insbesondere die Archivierung von Daten, oft eine Vielzahl von Benutzeraktionen erforderlich, was Arbeitszeit kostet und die Fehlerhäufigkeit erhöht. Die Anforderungen Benutzerfreundlichkeit, Zuverlässigkeit und Sicherheit werden bei den bekannten Systemen nur unvollkommen oder unausgewogen erreicht.

Es stellt sich daher die Aufgabe, ein Verfahren der eingangs genannten Art bereitzustellen, das die oben genannten Nachteile zumindest teilweise vermeidet.

Diese Aufgabe wird von Anspruch 1 gelöst, indem für die Ver- und Entschlüsselung der Daten jeweils mindestens ein erster und ein zweiter Schlüssel verwendet werden, wobei der zweite Schlüssel zwischen Ver- und Entschlüsselung zumindest zeitweise ausgelagert und lokal im Sicherungsmittel gelöscht wird.

Diese Lösung hat den Vorteil, dass sie ohne Passwörter auskommt. Bei einem Diebstahl des Sicherungsmittels kann der unbefugte Zugriff auf die archivierten Daten gesperrt werden, indem der ausgelagerte, zweite Schüssel gesperrt wird.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 ein Blockdiagramm einer bevorzugten Ausführungsform eines Systems zur Archivierung von Daten basierend auf dem erfindungsgemässen Verfahren,
Fig. 2a ein Flussdiagramm eines Verfahrens zum Ablegen von Daten zur Durchführung im System von Fig. 1,
Fig. 2b ein Flussdiagramm eines Verfahrens zum Abrufen von Daten zur Durchführung im System von Fig. 1.
Fig. 3 ein Blockdiagramm einer weiteren bevorzugten Ausführungsform eines Systems zur Archivierung von Daten basierend auf dem erfindungsgemässen Verfahren.
Fig. 4a ein Flussdiagramm eines Verfahrens zum Ablegen von Daten zur Durchführung im System von Fig. 3,
Fig. 4b ein Flussdiagramm eines Verfahrens zum Abrufen von Daten zur Durchführung im System von Fig. 3.

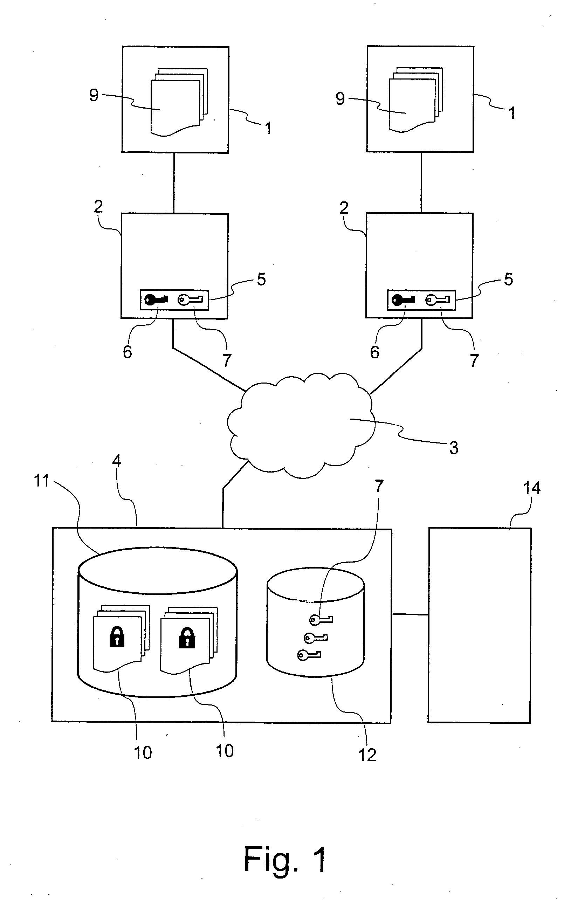

Fig. 1 zeigt ein Blockdiagramm einer bevorzugten Ausführungsform eines Systems zur Archivierung von Daten 9, 10 basierend auf dem erfindungsgemässen Verfahren. Es sind mehrere, hier exemplarisch zwei, Kundenstationen 1 vorgesehen. Auf diesen sind blanke, d.h. unverschlüsselte, Daten 9 gespeichert. Ferner ist für jede Kundenstation 1 ein Sicherungsmittel 2 vorgesehen. Das Sicherungsmittel 2 dient dem Ver- und Entschlüsseln von Daten 9, 10. Es weist hierfür zumindest einen ersten Schlüssel 6 und zeitweise einen zweiten Schlüssel 7 auf. Über das Netzwerk 3 kommunizieren die Sicherungsmittel 2 mit der Archivstation 4. In der Archivstation 4 sind in einem Datenspeicher 11 die verschlüsselten Daten 10 abgelegt. Ferner sind in einem Schlüsselspeicher 12 die jeweils zu den verschlüsselten Daten 10 gehörenden zweiten Schlüssel 7 abgelegt.

Die Daten 9, 10 können also sowohl als blanke Daten 9, als auch als verschlüsselte Daten 10 vorkommen, d.h. insbesondere gespeichert sein und/oder übertragen werden. Wird der Begriff "Daten" im vorliegenden Dokument ohne den Zusatz "blank" oder "verschlüsselt" verwendet, so ist der Informationsgehalt der Daten 9, 10 unabhängig von Verschlüsselungszustand gemeint. Bei den zu bestimmten blanken Daten 9 gehörigen verschlüsselten Daten 10 handelt es sich gemäss dieser Interpretationsvorschrift um dieselben Daten 9, 10. Die Bezugszeichenkombination "9, 10" ist dabei so zu verstehen, dass Daten 9, 10 zwar generell sowohl blank als auch verschlüsselt vorkommen können, im jeweiligen Zusammenhang aber auch nur eines zutreffen kann.

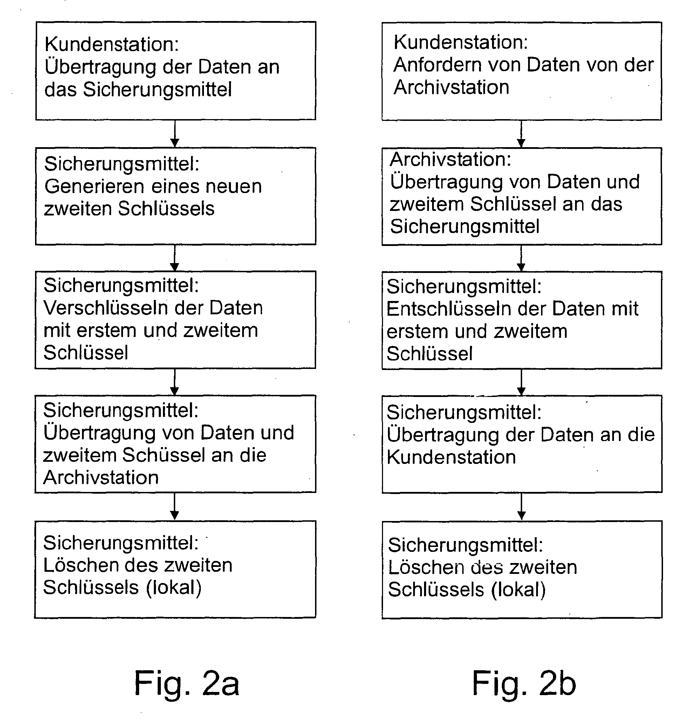

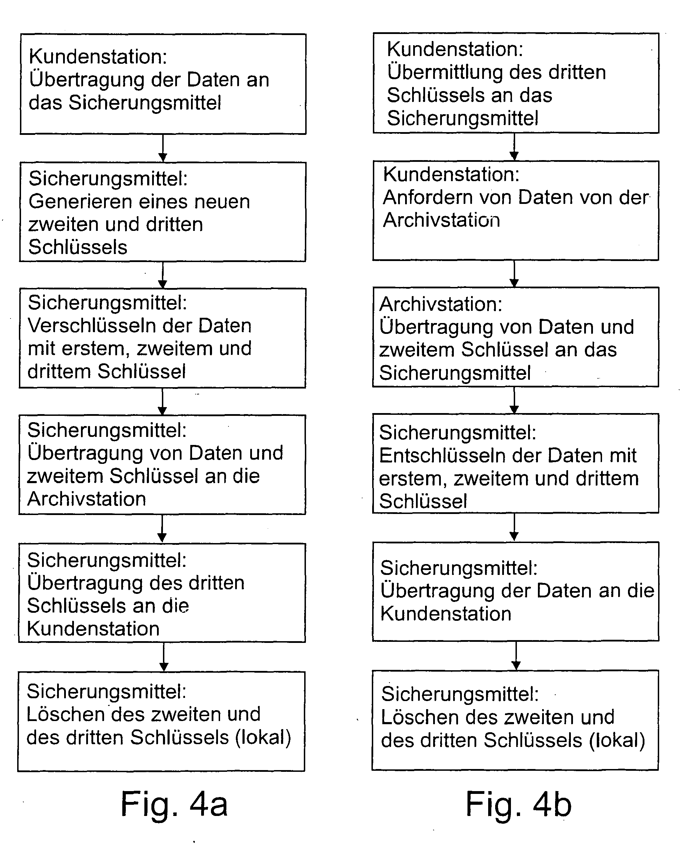

Die im Folgenden anhand von Fig. 2a und 2b beschriebenen Verfahren bilden zusammen, d.h. nacheinander ausgeführt, eine Ausführungsform des erfindungsgemässen Verfahrens zur Datenarchivierung. Die Ausführungsform basiert auf.einer Verschlüsselung mit zwei Schlüsseln 6, 7:
Fig. 2a zeigt ein Flussdiagramm eines Verfahrens zum Ablegen von Daten 9, 10 zur Durchführung im System von Fig. 1. Bei der Archivierung werden die blanken Daten 9 zunächst von der Kundenstation 1 an das Sicherungsmittel 2 übertragen. Das Sicherungsmittel 2 generiert dann, oder bereits zu einem früheren Zeitpunkt, einen neuen zweiten Schlüssel 7. Die blanken Daten 9 werden vom Sicherungsmittel 2 zumindest mit dem ersten Schlüssel 6 und dem zweiten Schlüssel 7 verschlüsselt und anschliessend als verschlüsselte Daten 10 an die Archivstation 4 übertragen. Der zweite Schlüssel 7 wird ebenfalls an die Archivstation 4 übertragen und dann lokal, d.h. im Sicherungsmittel 2 gelöscht. Die Übertragung des zweiten Schlüssels 7 kann zusammen mit den verschlüsselten Daten 10 erfolgen, z.B. im Kopfteil einer Datei.
Fig. 2b zeigt ein Flussdiagramm eines Verfahrens zum Abrufen von Daten 9, 10 zur Durchführung im System von Fig. 1. Die Kundenstation 1 fordert zunächst Daten 9, 10 bei der Archivstation 2 an. Die angeforderten Daten 9, 10 werden als verschlüsselte Daten 10 von der Archivstation 4 zusammen mit dem zugehörigen zweiten Schlüssel 7 an das Sicherungsmittel 2 übertragen, dort mit dem ersten und dem zweiten Schlüssel 6, 7 entschlüsselt und danach als blanke Daten 9 an die Kundenstation 1 übertragen. Anschliessend wird der zweite Schlüssel 7 im Sicherungsmittel 2 wieder gelöscht.

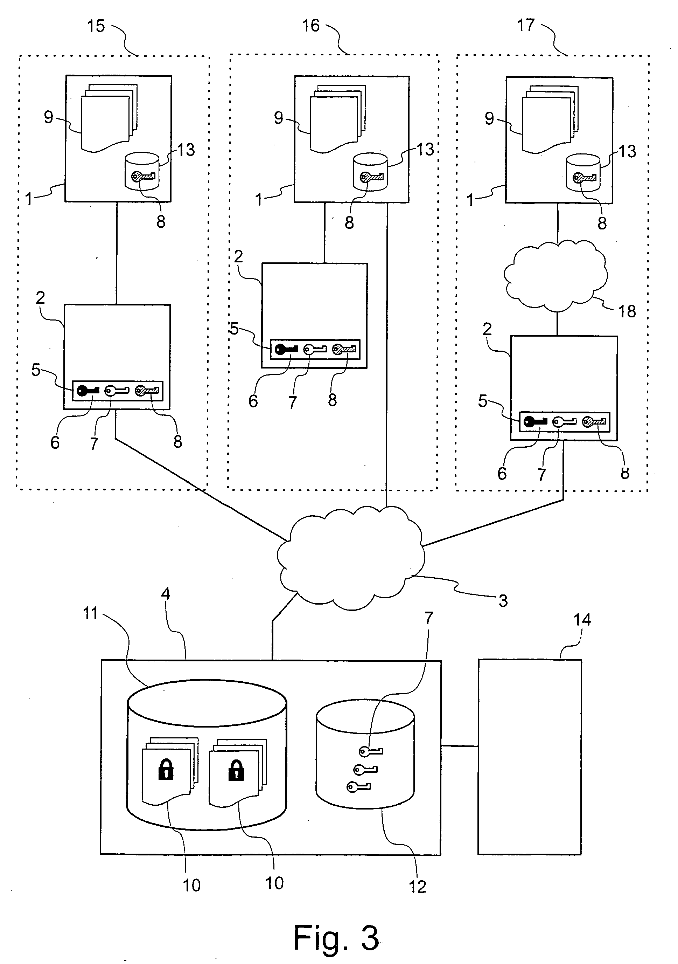

Fig. 3 zeigt ein Blockdiagramm einer weiteren bevorzugten Ausführungsform eines Systems zur Archivierung von Daten 9, 10 basierend auf dem erfindungsgemässen Verfahren. Im Gegensatz zum System aus Fig. 1 ist ein dritter Schlüssel 8 vorgesehen. Dieser wird zwischen Ver-und Entschlüsselung jeweils in der Kundenstation 1 ausgelagert. Die Kundenstation 1 weist hierfür bevorzugt einen Schlüsselspeicher 13 auf. Ferner sind exemplarisch drei verschiedene Anschlusskonfigurationen 15, 16, 17 für jeweils eine Kundenstation 1 und ein zugehöriges Sicherungsmittel 2 gezeigt. Die erste Konfiguration 15 entspricht der Lösung aus Fig. 1. Das Sicherungsmittel 2 ist zwischen Kundenstation 1 und Archivstation 4 geschaltet. Bei der zweiten Konfiguration 16 ist die Kundenstation 1 direkt mit dem Netzwerk 3 verbunden. Das Sicherungsmittel 2 ist an der Kundenstation 1 angeschlossen und kommuniziert indirekt über diese mit der Archivstation 4. Bei der dritten Konfiguration 17 ist eine Kundenstation 1 über ein lokales Netzwerk 18 mit dem Sicherungsmittel 2 verbunden.
   Die im Folgenden anhand von Fig. 4a und 4b beschriebenen Verfahren bilden zusammen, d.h. nacheinander ausgeführt, eine weitere Ausführungsform des erfindungsgemässen Verfahrens zur Datenarchivierung. Die Ausführungsform basiert auf einer Verschlüsselung mit drei Schlüsseln 6, 7, 8:
Fig. 4a zeigt ein Flussdiagramm eines Verfahrens zum Ablegen von Daten 9, 10 zur Durchführung im System von Fig. 3. Bei der Archivierung werden die blanken Daten 9 von der Kundenstation 1 an das Sicherungsmittel 2 übertragen. Das Sicherungsmittel 2 generiert dann, oder bereits zu einem früheren Zeitpunkt, einen neuen zweiten und einen neuen dritten Schlüssel 7, 8. Das Sicherungsmittel 2 verschlüsselt die blanken Daten 9 zumindest mit dem ersten Schlüssel 6, dem zweiten Schlüssel 7 und dem dritten Schlüssel 8 und überträgt sie dann an die Archivstation 4. Der zweite Schlüssel 7 wird ebenfalls an die Archivstation 4 übertragen. Der dritte Schlüssel 8 wird an die Kundenstation 1 übertragen. Sowohl der zweite, als auch der dritte Schlüssel 7, 8 werden anschliessend lokal, d.h. im Sicherungsmittel 2 gelöscht. Die Übertragung des zweiten Schlüssels 7 kann zusammen mit den Daten 9, 10 erfolgen, z.B. im Kopfteil einer Datei.
Fig. 4b zeigt ein Flussdiagramm eines Verfahrens zum Abrufen von Daten 9, 10 zur Durchführung im System von Fig. 3. Die Kundenstation 1 überträgt den dritten Schlüssel 8 ans Sicherungsmittel 2. Anschliessend oder gleichzeitig fordert sie Daten 9, 10 bei der Archivstation 2 an. Die angeforderten Daten 9, 10 werden als verschlüsselte Daten 10 von der Archivstation 4 zusammen mit dem zugehörigen zweiten Schlüssel 7 an das Sicherungsmittel 2 übertragen, dort mittels der drei Schlüssel 6, 7, 8 entschlüsselt und dann als blanke Daten 9 an die Kundenstation 1 übertragen. Nach der Entschlüsselung wird der zweite und der dritte Schlüssel 7, 8 im Sicherungsmittel 2 gelöscht.

Die im Folgenden beschriebenen Ausführungsvariationen und Erläuterungen beziehen sich auf die Gesamtheit der möglichen Ausführungsformen des erfindungsgemässen Verfahrens, also insbesondere sowohl auf die Ausführungsform mit zwei Schlüsseln gemäss Fig. 1, Fig. 2a und 2b, als auch auf die Ausführungsform mit drei Schlüsseln gemäss Fig. 3, Fig. 4a und 4b:

Für die Verschlüsselung wird bevorzugt ein symmetrischer Verschlüsselungsalgorithmus verwendet, insbesondere der 3DES, IDEA oder Blowfish Algorithmus. Für die Verschlüsselung mit mehreren Schlüssen kann entweder eine Mehrfachverschlüsselung vorgenommen werden oder die Schlüssel werden zusammengesetzt und es wird eine Verschlüsselung mit einem entsprechend längerem zusammengesetzten Schlüssel 5 vorgenommen.

Die Länge der Schlüssel 6, 7 und gegebenenfalls 8 kann z.B. 1024, 2048 oder 4096 Bit sein. Für einen sicheren Betrieb sollte jeder der Schlüssel 6, 7 und gegebenenfalls 8 mindestens 100 Bit lang sein.

Der erste Schlüssel 6 ist bevorzugt konstant, d.h. er wird vorzugsweise bei der Herstellung oder Inbetriebnahme des Sicherungsmittels 2 mittels eines Zufallsgenerators erzeugt und gespeichert. Eine Kopie des ersten Schlüssels 6 kann ausserhalb des Systems, z.B. durch den Archivbetreiber in einem Tresor, aufbewahrt werden um damit bei einem Verlust oder Ausfall des Sicherheitsmittels 2 ein Ersatzgerät herstellen zu können. Das Sicherungsmittel 2 ist bevorzugt derart gestaltet, dass der erste Schlüssel 6 gespeichert, aber nicht oder nur einmal ausgelesen werden kann. Es handelt sich um eine Art "Geräteschlüssel" bzw. einen "privaten Schlüssel", allerdings nicht in dem Sinne, dass es einen "öffentlichen Schlüssel" dazu gäbe.

Der zweite Schlüssel 7 wird bevorzugt vor jeder Datenarchivierung neu, vorzugsweise im Sicherungsmittel mittels eines Zufallsgenerators, generiert. Dabei werden alle bei einer Archivierung, d.h. im Wesentlichen gemeinsam, übertragenen Daten bzw. Dateien mit demselben zweiten Schlüssel 7 verschlüsselt. Es ist jedoch auch möglich für jede Datei oder für Gruppen von Dateien jeweils einen neuen zweiten Schlüssel 7 zu generieren und nach der Benutzung auszulagern. Ferner ist es möglich nur einen, konstanten zweiten Schlüssel 7 vorzusehen, welcher z.B. in der Archivstation 4 ausgelagert ist und vor Verschlüsselungen jeweils ans Sicherungsmittel 2 übertragen wird. In den Ausführungsformen von Fig. 1 und Fig. 3 wird der zweite Schlüssel 7 in die Archivstation 4 ausgelagert und insbesondere zusammen mit den verschlüsselten Daten 10 dort hin übertragen bzw. von dort zurückübertragen. Der zweite Schlüssel 7 kann in diesem Zusammenhang aufgrund seiner Funktion auch als "Datenbegleitschlüssel" bezeichnet werden.

Der dritte Schlüssel 8, wird, sofern ein solcher verwendet wird, ebenfalls bevorzugt vor jeder Datenarchivierung neu, vorzugsweise im Sicherungsmittel 2 mittels eines Zufallsgenerators, erzeugt. Dabei kann für jede Datei oder jede Gruppe gemeinsam übertragener Dateien jeweils ein neuer dritter Schlüssel 8 generiert werden. In der Ausführungsform von Fig. 3 wird der dritte Schlüssel 8 in die Kundenstation 1 ausgelagert. Um Daten aus dem Archiv abzurufen wird der dritte Schlüssel 8 wieder ans Sicherungsmittel 2 zurückübertragen. Er kann in diesem Zusammenhang aufgrund seiner Funktion auch als "Datenabrufschlüssel" bezeichnet werden.

Falls mehrfach Daten archiviert werden und der zweite und gegebenenfalls dritte Schlüssel 7, 8 jeweils neu generiert werden gibt es mehrere zweite und gegebenenfalls dritte Schlüssel 7, 8.

Die Kommunikation zwischen den Sicherungsmitteln 2, oder gegebenenfalls den Kundenstationen 1, und der Archivstation 4 erfolgt bevorzugt über ein Netzwerk 3. Dies kann insbesondere ein Weitverkehrsnetz, d.h. WAN bzw. Wide Area Network, sein, so dass eine "Datenfernarchivierung" möglich ist. Das Netzwerk 3 kann insbesondere ein öffentliches Datennetz sein, z.B. das Internet. Es kann ferner ein Netzwerk sein, dass dem Ethernet Standard entspricht und/oder ein virtuelles privates Netzwerk sein und/oder für Fernzugriff gemäss dem Standard RAS, d.h. remote access service, ausgestaltet sein.

Die Kommunikation zwischen der Kundenstation 1 und dem Sicherungsmittel 2 und die Kommunikation zwischen den Sicherungsmitteln 2 und der Archivstation 4 kann in einer speziellen Ausführungsform auch über dasselbe Netzwerk erfolgen.

Das Sicherungsmittel 2 ist vorzugsweise eine physikalische Baueinheit. Es kann sich dabei um eine "Box" mit Anschlüssen für ein Netzwerk und/oder einen Computer handeln. Insbesondere kann es sich um eine PC-Card, d.h. eine scheckkartengrosse Zusatzkarte für Computer mit PCMCIA-Steckplatz (personal computer memory card international association) oder ein USB-Device, d.h. ein Gerät gemäss dem USB-Standard (universal serial bus) handeln.

Die blanken Daten 9 auf der Kundenstation 1 können insbesondere in Form einer Datei oder mehrerer Dateien vorliegen.

Bei der Kundenstation 1 handelt es sich in der Regel um einen Client-Computer. Es kann allerdings auch ein Server-Computer oder ein eingebettetes System sein. Das erfindungsgemässe Verfahren kann mit nur einer Kundenstation 1 ausgeführt werden, meist werden jedoch mehrere Kundenstationen 1 vorgesehen sein. Die Kundenstationen 1 können sich bezüglich Hardware und Software unterscheiden. In einer speziellen Ausführung der Erfindung sind die Kundenstation 1 und die Archivstation 4 derselbe Computer. Insbesondere bei mehreren Kundenstationen 1 ist es wichtig, dass durch die Archivstation 4 geprüft wird, ob eine Kundenstation 1 bzw. deren Sicherungsmittel 2 berechtigt ist die angeforderten Daten und den zugehörigen zweiten Schlüssel 7 zu empfangen. Eine Übermittlung erfolgt nur, wenn eine solche Berechtigung vorliegt. Hierbei wird insbesondere der Absender der Datenanforderung, d.h. die ISDN-Nummer oder IP-Adresse, und/oder eine Signatur der Kundenstation 1 und/oder des zugehörigen Sicherungsmittels 2 überprüft.

Bei der Archivstation 4 handelt es sich in der Regel um einen oder mehrere Server, d.h. Dienste anbietende Rechner. Insbesondere kann ein erster und ein zweiter Server vorgesehen sein, wobei verschlüsselte Daten 10 auf dem ersten Server gespeichert werden und die zugehörigen zweiten Schüssel 7 auf einem zweiten Server gespeichert werden. Die zweiten Schlüssel 7 können jedoch auch auf einem oder mehreren speziellen Hardware-Modulen gespeichert werden, insbesondere auf einem PCI-Adapter. Dies hat den Vorteil, dass zum Sperren von verschlüsselten Daten 10 auf der Archivstation 2 lediglich das Hardware-Modul entfernt werden muss. Die zweiten Schlüssel 7 können ferner auf der Archivstation 4 verschlüsselt gespeichert werden. Die Archivstation 4 weist zudem bevorzugt zur Sicherung des Datenbestandes, d.h. insbesondere der verschlüsselten Daten 10 und/oder der zweiten Schlüssel 7, eine Speichereinheit 14 zur redundanten Datenspeicherung auf, d.h. ein Backup-System, insbesondere ein Bandlaufwerk, ein Disk-Array oder einen CD- oder DVD-Brenner. Der Datenbestand der Archivstation 4 wird bevorzugt in regelmässigen Abständen, z.B. täglich auf der Speichereinheit 14 gesichert. Die Archivstation 4 ist bevorzugt in einem gesicherten Raum angeordnet, insbesondere in einem Bunker oder in einem Bergstollen.

Insbesondere wenn ein Sicherungsmittel 2 gestohlen wird muss der Zugriff auf die verschlüsselten Daten 10 der Archivstation 4 über dieses Sicherungsmittel 2 gesperrt werden. Eine solche Sperrung verschlüsselter Daten 10 erfolgt bevorzugt indem der oder die zugehörigen zweiten Schlüssel 7 aus dem System entfernt werden, z.B. indem der Schlüsselspeicher, wie bereits oben beschrieben, als Hardware-Modul entfernt wird oder indem die zweiten Schlüssel 7 auf einen Datenträger kopiert und in der Archivstation 4 gelöscht werden. Die verschlüsselten Daten 10 können dann zwar ausgelesen, aber nicht entschlüsselt werden. Zum Entsperren werden die zweiten Schlüssel 7 wieder auf die Archivstation 4 zurückkopiert. Dieses Vorgehen hat unter anderem den Vorteil, dass der Zugriff auf die Daten gesperrt und entsperrt werden kann, ohne entsprechende Funktionen des Betriebsystems zu nutzen, deren Sicherheit meist nicht überprüfbar ist.

Bei einer Ausführungsform der Erfindung mit drei Schlüsseln 6, 7, 8 kann das Sperren der verschlüsselten Daten 10 wahlweise durch Löschen der zweiten Schlüssel 7 in der Archivstation 4 oder durch Löschen der dritten Schlüssel 8 in der Klientenstation 1 oder beidem erfolgen.

Beim in diesem Dokument beschriebenen Löschen von Schlüsseln, bzw. deren Entfernen aus dem System, ist darauf zu achten, dass die Daten tatsächlich physikalisch gelöscht werden und keine temporären Dateien oder wiederherstellbare Dateien zurückbleiben. Ferner sollte der Übertragungspfad kein Gedächtnis haben, d.h. die, z.B. zur Pufferung, in Zwischenstationen bzw. Netzknoten gespeicherte Information sollte nach der Übertragung gelöscht werden.

Bei den anhand von Fig. 2a, 2b, 3a und 3b beschriebenen Ausführungsformen wurden Empfang, Ver- bzw. Entschlüsselung und Übertragung der Daten 9, 10 durch das Sicherungsmittel exemplarisch als getrennte, sequentielle Verfahrensschritte definiert. Es ist dem Fachmann jedoch ersichtlich, dass diese Schritte auch gleichzeitig ausgeführt werden können. Die Daten werden dabei als Datenstrom behandelt. Ein Vorteil einer solchen Ausführung liegt einerseits in der höheren Geschwindigkeit, andererseits darin, dass nicht die gesamten zu demselben Schlüsselsatz gehörigen Daten 9, 10 gleichzeitig im Sicherungsmittel 2 zwischengespeichert werden müssen.

In den beschriebenen Ausführungen der Erfindung ist jeweils mindestens ein erster und ein zweiter Schlüssel 6, 7 vorgesehen, wobei der erste Schlüssel 6 ein "Geräteschlüssel" bzw. "privater Schlüssel" ist und nicht ausgelagert wird. Auf diesen ersten Schlüssel 6 kann auch verzichtet werden, wenn als Ersatz dafür ein geheimer oder mit geheimen Parametern modifizierter Algorithmus verwendet wird.

Das System zur Ausführung des erfindungsgemässen Verfahrens wird bevorzugt derart konfiguriert, dass die Datenverschlüsselung vollautomatisch im Hintergrund erfolgt und keine Benutzereingaben und insbesondere keine Passworteingaben erforderlich sind.

## Patentansprüche

1. Verfahren zur Datenarchivierung mit automatischer Ver- und Entschlüsselung,
wobei bei einem Ablegen von Daten (9, 10) diese von einer Kundenstation (1) an ein Sicherungsmittel (2) übertragen werden, von diesem verschlüsselt werden und an eine Archivstation (4) übertragen werden,
und wobei bei einem Abrufen der Daten (9, 10) diese von der Archivstation (4) an das Sicherungsmittel (2) übertragen werden, von diesem entschlüsselt werden und an die Kundenstation (1) übertragen werden,
**dadurch gekennzeichnet, dass** für die Ver- und Entschlüsselung der Daten (9, 10) jeweils mindestens ein erster und ein zweiter Schlüssel (6, 7) verwendet werden, wobei der zweite Schlüssel (7) zwischen der Ver- und Entschlüsselung zumindest zeitweise ausgelagert und lokal im Sicherungsmittel (2) gelöscht wird.

2. Verfahren gemäss Anspruch 1, **dadurch gekennzeichnet, dass** der zweite Schlüssel (7) ausgelagert wird, indem er an die Archivstation (4) übertragen, dort gespeichert und später wieder zurückübertragen wird.

3. Verfahren gemäss Anspruch 2, **dadurch gekennzeichnet, dass** der zweite Schlüssel (7) zusammen mit den Daten (9, 10) an die Archivstation (4) übertragen wird und/oder zusammen mit den Daten (9, 10) ans Sicherungsmittel (2) zurückübertragen wird.

4. Verfahren gemäss einem der vorhergehenden Ansprüche, **dadurch gekennzeichnet, dass** für die Ver- und Entschlüsselung der Daten (9, 10) ferner jeweils zusätzlich ein dritter Schlüssel (8) verwendet wird, welcher zwischen der Ver- und Entschlüsselung zumindest zeitweise ausgelagert und lokal im Sicherungsmittel (2) gelöscht wird.

5. Verfahren gemäss Anspruch 4, **dadurch gekennzeichnet, dass** der dritte Schlüssel (8) ausgelagert wird, indem er an die Kundenstation (1) übertragen, dort gespeichert und später wieder zurückübertragen wird.

6. Verfahren gemäss einem der vorhergehenden Ansprüche, **dadurch gekennzeichnet, dass** aus dem ersten, dem zweiten und gegebenenfalls dem dritten Schlüssel (6, 7, 8) ein zusammengesetzter Schlüssel (5) gebildet wird und die Ver- und Entschlüsselung jeweils mit diesem zusammengesetzten Schlüssel (5) erfolgt.

7. Verfahren gemäss einem der vorhergehenden Ansprüche, **dadurch gekennzeichnet, dass** bei der Ver- und Entschlüsselung ein symmetrischer Verschlüsselungsalgorithmus verwendet wird, insbesondere der 3DES-, IDEA-oder Blowfish Algorithmus.

8. Verfahren gemäss einem der vorhergehenden Ansprüche, **dadurch gekennzeichnet, dass** der erste Schlüssel (6) und/oder der zweite Schlüssel (7) und/oder gegebenenfalls der dritte Schlüssel (8) jeweils eine Länge von mindestens 100 Bit haben.

9. Verfahren gemäss einem der vorhergehenden Ansprüche, **dadurch gekennzeichnet, dass** der erste Schlüssel (6) und/oder der zweite Schlüssel (7) und/oder gegebenenfalls der dritte Schlüssel (8) jeweils eine Länge von ca. 1024, 2048 und/oder 4096 Bit haben.

10. Verfahren gemäss einem der vorhergehenden Ansprüchen, **dadurch gekennzeichnet, dass** der erste Schlüssel (6) bei einer Herstellung oder Inbetriebnahme des Sicherungsmittels (2) erzeugt und gespeichert wird, insbesondere mittels eines Zufallsgenerators.

11. Verfahren gemäss einem der vorhergehenden Ansprüche, **dadurch gekennzeichnet, dass** das Sicherungsmittel (2) derart gestaltet ist, dass der erste Schlüssel (6) nicht an andere Einheiten übertragen werden kann und insbesondere nicht ausgelesen werden kann.

12. Verfahren gemäss einem der vorhergehenden Ansprüche, **dadurch gekennzeichnet, dass** vor dem Ablegen von Daten (9, 10) jeweils der zweite Schlüssel (7) und/oder gegebenenfalls der dritte Schlüssel (8) neu generiert wird, insbesondere mittels eines Zufallsgenerators.

13. Verfahren gemäss einem der vorhergehenden Ansprüche, **dadurch gekennzeichnet, dass** der zweite Schlüssel (7) und/oder gegebenenfalls der dritte Schlüssel (8) vom Sicherungsmittel (2) generiert werden.

14. Verfahren gemäss einem der vorhergehenden Ansprüche, **dadurch gekennzeichnet, dass** eine Kommunikation zwischen der Kundenstation (1) und dem Sicherungsmittel (2) über ein Netzwerk (18) erfolgt.

15. Verfahren gemäss einem der vorhergehenden Ansprüche, **dadurch gekennzeichnet, dass** eine Kommunikation zwischen dem Sicherungsmittel (2) und der Archivstation (4) über ein Netzwerk (3) erfolgt.

16. Verfahren gemäss Anspruch 15, **dadurch gekennzeichnet, dass** das Netzwerk (3) dem Ethernet Standard entspricht und/oder ein virtuelles privates Netzwerk ist und/oder für Fernzugriff gemäss RAS, d.h. remote access service, ausgestaltet ist.

17. Verfahren gemäss einem der vorhergehenden Ansprüche, **dadurch gekennzeichnet, dass** das Sicherungsmittel (2) eine physikalische Baueinheit ist, insbesondere eine PC-Card, oder ein USB-Device.

18. Verfahren gemäss einem der vorhergehenden Ansprüche, **dadurch gekennzeichnet, dass** die Daten (9, 10) in Form einer Datei oder mehrerer Dateien übertragen und gespeichert werden.

19. Verfahren gemäss Anspruch 18, **dadurch gekennzeichnet, dass** der zweite Schlüssel (7) in einem Kopfteil der Dateien oder gegebenenfalls einer der Dateien an die Archivstation (4) übertragen wird.

20. Verfahren gemäss einem der Ansprüche 18 oder 19, **dadurch gekennzeichnet, dass** gegebenenfalls für jede der Dateien oder jede Gruppe gemeinsam übertragener Dateien ein eigener zweiter Schlüssel (7) und/oder gegebenenfalls ein eigener dritter Schlüssel (8) generiert wird.

21. Verfahren gemäss einem der vorhergehenden Ansprüche, **dadurch gekennzeichnet, dass** weitere Kundenstationen (1) vorgesehen sind.

22. Verfahren gemäss einem der vorhergehenden Ansprüche, **dadurch gekennzeichnet, dass** vor einer Übermittlung der Daten (9, 10) von der Archivstation (4) an die Kundenstation (1) geprüft wird, ob die Kundenstation (1) berechtigt ist die Daten (9, 10) zu empfangen und eine Übermittlung nur erfolgt, wenn die Kundenstation (1) berechtigt ist.

23. Verfahren gemäss Anspruch 22, **dadurch gekennzeichnet, dass** bei einer Prüfung, ob die Kundenstation (1) berechtigt ist die Daten (9, 10) zu empfangen, eine ISDN-Nummer und/oder eine IP-Adresse eines Absenders einer Datenanforderung geprüft wird.

24. Verfahren gemäss einem der vorhergehenden Ansprüche, **dadurch gekennzeichnet, dass** eine Berechtigung die Daten (9, 10) von der Archivstation (4) abzurufen erforderlichenfalls gesperrt wird, indem auf der Archivstation (4) der zweite Schlüssel (7), welcher zu den Daten (9, 10) gehört, einem Fernzugriff entzogen wird, insbesondere indem er gelöscht oder ausgelagert und gelöscht wird.

25. Verfahren gemäss einem der vorhergehenden Ansprüche, **dadurch gekennzeichnet, dass** die Archivstation (4) einen ersten und einen zweiten Serverrechner aufweist, wobei der erste Serverrechner für eine Speicherung der Daten (9, 10) vorgesehen ist und der zweite Serverrechner für eine Speicherung des oder gegebenenfalls der zweiten Schlüssel (7) vorgesehen ist.

26. Verfahren gemäss einem der vorhergehenden Ansprüche, **dadurch gekennzeichnet, dass** der oder gegebenenfalls die zweiten Schlüssel (7) auf der Archivstation (4) verschlüsselt abgelegt werden und/oder in einem Hardwaremodul oder Adapter abgelegt werden.

27. Verfahren gemäss einem der vorhergehenden Ansprüche, **dadurch gekennzeichnet, dass** die Daten (9, 10) und/oder der oder gegebenenfalls die zweiten Schlüssel (7) der Archivstation (4) zur Datensicherung auf eine Speichereinheit (14) kopiert werden, insbesondere auf ein Bandlaufwerk, eine CD, eine DVD oder ein Disk-Array.

28. Verfahren gemäss einem der vorhergehenden Ansprüche, **dadurch gekennzeichnet, dass** die Archivstation (4) in einem gesicherten Raum angeordnet ist, insbesondere in einem Bunker oder in einem Bergstollen.
